# EUROPÄISCHE PATENTSCHRIFT

(11) **EP 1 240 067 B1**
(45) Veröffentlichungstag und Bekanntmachung des Hinweises auf die Patenterteilung: **02.04.2003**
(21) Anmeldenummer: 00992073.7
(22) Anmeldetag: 19.12.2000
(51) Int. Cl.: B62D 53/12

(54) **SATTELKUPPLUNG FÜR SATTELZUGMASCHINE UND -ANHÄNGER**
FIFTH WHEEL FOR THE TRACTOR OR THE TRAILER OF AN ARTICULATED TRUCK
SELLETTE D'ATTELAGE POUR TRACTEUR ROUTIER ET REMORQUE

(30) Priorität: 22.12.1999 DE 19961930; 28.04.2000 DE 10020961; 07.09.2000 DE 10044331
(43) Veröffentlichungstag der Anmeldung: 18.09.2002
(73) Patentinhaber: Hamburger Patent Schmiede GmbH, 21079 Hamburg (DE)
(72) Erfinder: METTERNICH, Heinz-Rüdiger, 21079 Hamburg (DE)
(74) Vertreter: Glaeser, Joachim, Dipl.-Ing.
(86) Internationale Anmeldenummer: EP0012934
(87) Internationale Veröffentlichungsnummer: WO01046001

(56) Entgegenhaltungen:
- EP-A- 0 058 075
- US-A- 3 711 122

## Beschreibung

Die Erfindung bezieht sich auf eine Sattelkupplung für die Kupplung einer Sattelzugmaschine mit einem Sattelanhänger, mit einer Sattelplatte, einem Königszapfen mit einer Innenbohrung mit einer äußeren Kupplung- oder Eingriffsfläche sowie mit Anschlüssen zur Verbindung von elektrischen und pneumatischen Versorgungsleitungen zwischen der Sattelzugmaschine und dem Sattelanhänger, wobei die Versorgungsleitungen der Sattelzugmaschine zu einem Steckerteil eines Versorgerteils und die Versorgungsleitungen von einem Steckdosenteil im Inneren des Königszapfens zu den vorgesehenen Stellen am Sattelanhänger geführt sind, der Steckerteil aus dem Versorgerteil ausfahrbar und in den Steckdosenteileinfahrbar ist und wobei der Steckerteil in Bezug auf den Steckdosenteil drehbar ist, wobei die zu den Versorgungsleitungen gehörenden miteinander verbindbaren Teile des Steckerteils und die des Steckdosenteils als jeweils paarweise ineinandersteckbare rotationssymmetrische Buchsen ausgebildet sind, dass die Verbindungsbereiche der Buchsen im gekuppelten Zustand aud den Bereich räumlich begrenzt sind, der radial innerhalb zu der Kupplungs- oder Eingriffsfläche des Königszapfens liegt, dass alle Buchsen koaxial zueinander und zur Achse des Königszapfens ausgerichtet sind.

Eine Sattelkupplung ist bekannt (EP 816 211-A2), sie hat jedoch insofern gravierende Nachteile, als durch die Nebeneinanderanordnung der einzelnen Leitungen im Königszapfen dieser so weit aufgebohrt werden muss, dass zwar in seinem Inneren die Leitungen und die Leiterverbindungen aufgenommen werden können, allerdings die Festigkeit soweit geschwächt worden ist, dass er für den praktischen Einsatz nicht in Frage kommt.

Bei einer anderen bekannten Königszapfenausbildung der eingangs genannten Art (EP 058 075-A1) befinden sich im Inneren des Königszapfens und des Steckers des Versorgerteils zwei konzentrische Druckluftleitungen. Elektrische Leitungen sind dort jedoch nicht vorgesehen, vielmehr sollen beispielsweise die Blinklichter des Sattelanhängers über eine Batterie auf dem Sattelanhänger und über eine Rundfunkfrequenzübertragung betätigt werden.

Bei einem weiterhin bekannten Kupplungssystem (US-PS 3 181 887) wird eine Druckluftleitung im Inneren des Königszapfens hindurchgeführt. Flexible elektrische Leitungen werden sowohl im Königszapfen als auch im Stecker des Versorgerteils zu zusammenwirkenden Stiften und Schleifringen geführt. Derartige Kontaktverbindungen ergeben jedoch keine zuverlässigen elektrischen Verbindungen und sind darüber hinaus wegen möglicher Verschmutzungen nicht mehr betriebssicher.

Bei einer bekannten Fahrzeugkupplungsvorrichtung (US 3 428 334) werden zwei Druckluftleitungen im Königszapfen geführt, wobei elektrische Verbindungen über zusammenwirkende Schleifer und Schleifringe durchgeführt werden, die auf zueinander passenden Konusflächen angeordnet sind. Die elektrischen Verbindungen sind hier jedoch nicht zufriedenstellend betriebssicher. Es kommt noch hinzu, dass der Köngigszapfen durch die gewählte Art der Verbindung soweit geschwächt worden ist, dass die Kupplungseinrichtung insgesamt in der Praxis nicht einsetzbar ist.

Der Erfindung liegt die Aufgabe zugrunde, eine Sattelkupplung der eingangs genannten Art so auszugestalten, dass der Königszapfen eine solche Festigkeit hat, dass die üblicherweise erforderliche Betriebserlaubnis der Zulassungsbehörden erteilt werden können und elektrisch einwandfreie Verbindungen zwischen Stecker und Steckdose möglich sind.

Erreicht wird dies durch die im kennzeichnenden Teil des Anspruchs angegebenen Merkmale, dass die Buchsen für die Gleichspannungsversorgung im Königszapfen und im Versorgerteil radial ganz innen angeordnet sind, die Buchsen für Datenleitungen im Königszapfen und im Versorgerteil radial weiter außerhalb angeordnet und die Buchsen für die Druckluft-Versorgungsleitungen die elektrischen Leitungen umgeben und dass die radial größte Buchse und die Innenbohrung des Königszapfens jeweils einen Durchmesser von weniger als der Hälfte des Außendurchmessers der Kupplungs- oder Eingriffsfläche des Königszapfens haben.

Bei der Sattelkupplung gemäß der Erfindung werden alle Verbindungen, die pneumatischen genauso wie die elektrischen Verbindungen, durch zueinander konzentrische Buchsen bewerkstelligt, die ineinandergesteckt werden. Ineinandergesteckte

Buchsen haben eine relativ große Wirkfläche, was bei den elektrischen Leitungen zu einwandfreien Kontakten führt.

Die Eingriffsflächen dieser ineinandergesteckten Buchsen liegen in einem Bereich, der radial innen zu der Kupplungs- bzw. Eingriffsfläche des Königszapfens angeordnet ist, also einem Bereich, wo im Falle des Rangierens des Sattelempfängers durch die Sattelzugmaschine wenig oder kaum Relativbewegungen stattfinden.

Die Buchsen für alle Leitungen sind koaxial zueinander so angeordnet, dass die Druckluftleitungen außerhalb zu den elektrischen Leitungen miteinander verbunden werden. Dies ergibt die Möglichkeit, vor dem Einführen des Steckers in den Steckdosenteil mit Hilfe von Druckluftstößen die Bereiche der elektrischen Verbindungen zu reinigen. Dies ist ein Vorteil, der bei dem rauhen Betrieb nicht außer Acht gelassen werden darf.

Schließlich wird die radial größte Buchse bzw. die Innenbohrungsfläche des Königszapfens so dimensioniert, dass deren Durchmesser höchstens die Hälfte des Außendurchmessers der Kupplungs- oder Eingriffsfläche des Königszapfens beträgt. Bei dieser Dimensionierung kann erreicht werden, dass die mechanischen Anforderungen erfüllt werden, die an Königszapfen gestellt werden.

Die Erfindung wird nachstehend anhand der Zeichnung beispielsweise erläutert.

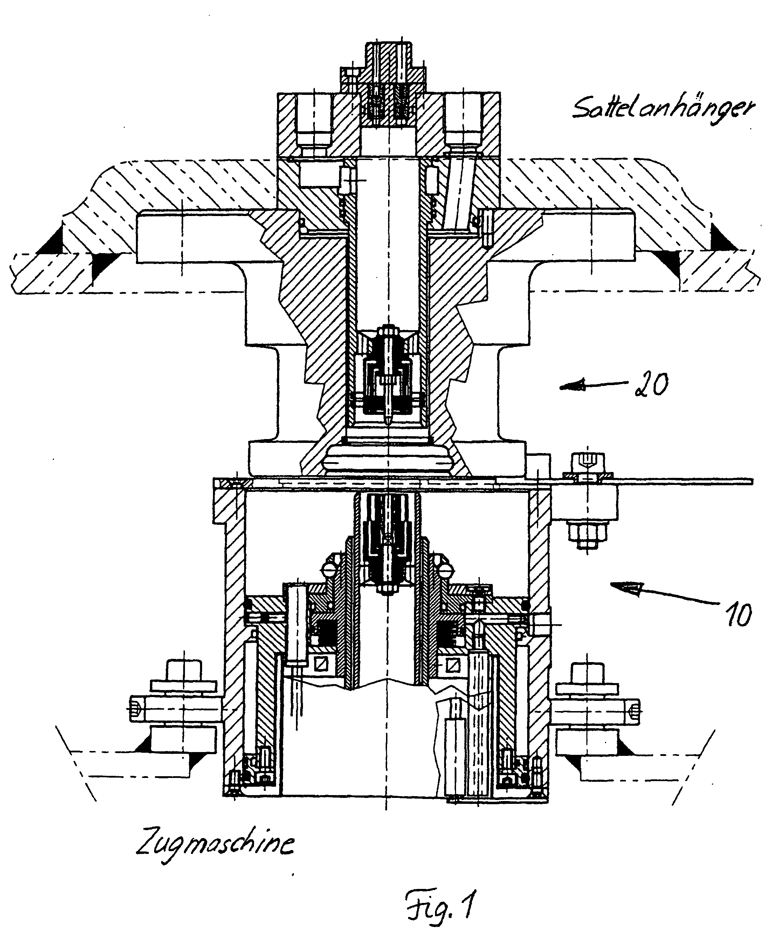

- Fig. 1: zeigt eine Querschnittsansicht durch den Königszapfen eines Sattelanhängers und den Versorgerteil einer Zugmaschine.

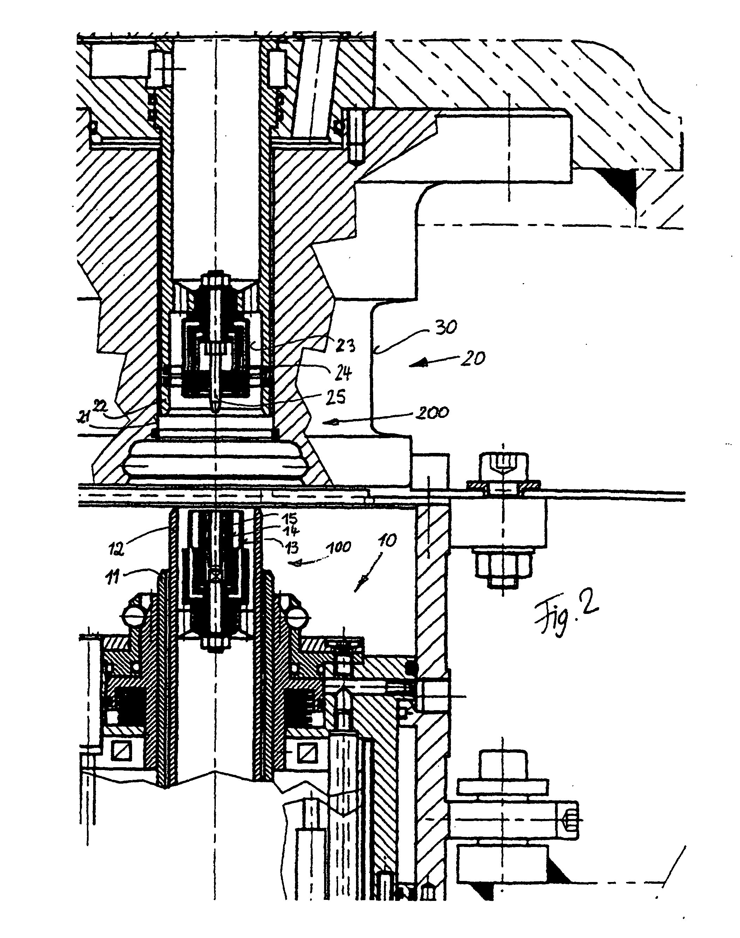

- Fig. 2: ist eine vergrößerte Dartellung aus der Figur 1.

In den Figuren sind die zusammenwirkenden Teile, nämlich der Königszapfen und der Versorgerteil, kurz vor dem eigentlichen Kupplungsvorgang gezeigt.

In den Figuren ist im oberen Bereich der Kupplungszapfen 20 des Sattelanhängers gezeigt, während im unteren Bereich der Versorgerteil 10 der Sattelzugmaschine gezeigt ist.

Der Kupplungszapfen 20 ist an dem Sattelanhänger befestigt, er gelangt beim Kupplungsvorgang in die Maulöffnung der Sattelplatte und die mechanische Verbindung zwischen Sattelzugmaschine und Sattelanhänger wird über Teile bewerkstelligt, die im sog. Kupplungs- bzw. Eingriffsbereich 30 des Kupplungszapfens 20 in bekannter Art und Weise eingreifen.

Wenn eine Sattelzugmaschine mit einem Versorgerteil 10 und einem Steckerteil 100 gemäß der vorliegenden Erfindung ausgestattet ist, wird der Versorgerteil 10 unterhalb des Kupplungszapfens 20 zentrisch angeordnet sein, und durch Ausfahren des Steckerteils 100 in einen Steckdosenteil 200 des Königszapfens 20 werden die gewünschten Bedingungen hergestellt.

Mit 11, 12, 13, 14 und 15 sind zueinander axial angeordnete Buchsen des Steckerteils 100 bezeichnet. Mit diesen Buchsen arbeiten Buchsen 21, 22, 23, 24 und 25 so zusammen, dass Axialschiebeeingriffsverbindungen möglich sind.

Die radial größte Buchse 11 des Steckerteils 100 wird in die Innenbohrung 21 des Königszapfens 20 eingeführt und nach außen hin abgedichtet. Innerhalb der Buchsen 11 und 22 und nach innen durch die Buchse 12 begrenzt, kann auf diese Art und Weise in einem Ringzylinderraum Druckluft von der Sattelzugmaschine zum Sattelanhänger übertragen werden. Innerhalb der Buchse 12 und radial außerhalb der Buchse 23 ist ein weiterer Ringraum zur Übertragung von Druck geschaffen. Die Buchsen 13 und 24 und 14 und 15 und 25 arbeiten in entsprechender Weise zusammen, um elektrische Verbindungen zu schaffen, die entweder zur Übertragung von digitalen Daten oder von Gleichspannung geeignet sind.

## Patentansprüche

1. Sattelkupplung für die Kupplung einer Sattelzugmaschine mit einem Sattelanhänger, mit einer Sattelplatte, einem Königszapfen (20) mit einer Innenbohrung mit einer äußeren Kupplung- oder Eingriffsfläche (30) sowie mit Anschlüssen zur Verbindung von elektrischen und pneumatischen Versorgungsleitungen zwischen der Sattelzugmaschine und dem Sattelanhänger, wobei die Versorgungsleitungen der Sattelzugmaschine zu einem Steckerteil (100) eines Versorgerteils (10) und die Versorgungsleitungen von einem Steckdosenteil (200) im Inneren des Königszapfens (20) zu den vorgesehenen Stellen am Sattelanhänger geführt sind, der Steckerteil (100) aus dem Versorgerteil (10) ausfahrbar und in den Steckdosenteil (200) einfahrbar ist und wobei der Steckerteil (100) in Bezug auf den Steckdosenteil (200) drehbar ist,
wobei die zu den Versorgungsleitungen gehörenden miteinander verbindbaren Teile des Steckerteils (11 - 15) und die des Steckdosenteils (21 - 25) als jeweils paarweise ineinandersteckbare rotationssymmetrische Buchsen ausgebildet sind,
die Verbindungsbereiche der Buchsen im gekuppelten Zustand auf den Bereich räumlich begrenzt sind, der radial innerhalb zu der Kupplungs- oder Eingriffsfläche (30) des Königszapfens (20) liegt,
und alle Buchsen (11 - 15, 21 - 25) koaxial zueinander und zur Achse des Königszapfens (20) ausgerichtet sind, **dadurch gekennzeichnet,**
**dass** die Buchsen (15, 25) für die Gleichspannungsversorgung im Königszapfen (20) und im Versorgerteil (10) radial ganz innen angeordnet sind, die Buchsen (13, 14, 23, 24) für Datenleitungen im Königszapfen (20) und im Versorgerteil (10) radial weiter außerhalb angeordnet und die Buchsen (11, 12, 21, 22) für die Druckluft-Versorgungsleitungen die elektrischen Leitungen umgeben und
**dass** die radial größte Buchse (11) und die Innenbohrung des Königszapfens (20) jeweils einen Durchmesser von weniger als der Hälfte des Außendurchmessers der Kupplungs- oder Eingriffsfläche (30) des Königszapfens (20) haben.

## Claims

1. Fifth wheel for coupling of a tractor with a trailer of an articulated truck, comprising a fifth wheel plate, a king pin (20) having an inner thread with an outer coupling or engagement surface (30) as well as connectors for connection of electrical and pneumatic supply lines between the tractor and the trailer of the articulated truck,
wherein the supply lines of the tractor of the articulated truck are guided to a plug part (100) of a supplier part (10) and the supply lines from a socket part (200) inside of the king pin to the predetermined places at the trailer of the articulated truck, the plug part (100) being extendible from the supply part (10) and retractable into the socket part (200), and wherein the plug part (100) is rotatable with respect to the socket part (200),
wherein the inter-connectable parts of the plug part (11 - 15) belonging to the supply lines and those of the socket part (21 - 25) are each formed as bushes symmetrical with regard to rotation, which can be inserted into each other in pairs,
the connection areas of the bushes being spatially restricted in the coupled state to that area, which is situated radially inside regarding the coupling or engagement surface of the king pin (20),
and all bushes (11 - 15, 21 - 25) being co-axially oriented towards each other and to the axis of the king pin (20), **characterised in**
**that** the bushes (15, 25) for the direct voltage supply in the king pin (20) and in the supply part (10) are arranged radially on the very inside, the bushes (13, 14, 23, 24) for data lines in the king pin (20) and in the supply part (10) are arranged radially further outside and the bushes (11, 12, 21, 22) for the pressurised air supply lines surround the electrical lines and
**that** the radially largest bush (11) and the inner thread of the king pin (20) each have a diameter of less than half of the outer diameter of the coupling or engagement surface (30) of the king pin.

## Revendications

1. Sellette d'attelage pour l'attelage pour tracteur de semi-remorque avec une remorque, avec une plaque de semi-remorque, un tenon principal (20) avec un alésage intérieur avec une surface extérieure d'attelage ou d'engagement (30), et avec des raccordements pour relier des conduites d'alimentation électriques et pneumatiques entre le tracteur de semi-remorque et la remorque, où les conduites d'alimentation du tracteur de semi-remorque sont amenées à une partie de prise mâle (100) d'une partie d'alimentation (10) et les conduites d'alimentation d'une partie de prise femelle (200) à l'intérieur du tenon principal (20) sont amenées aux endroits prévus sur la remorque, où la partie de prise mâle (100) peut être extraite de la partie d'alimentation (10) et introduite dans la partie de prise femelle (200), où la partie de prise mâle (100) peut tourner par rapport à la partie de prise femelle (200),
où les parties de la prise mâle (11-15) pouvant être reliées, qui appartiennent aux conduites d'alimentation, et celles de la prise femelle (21-25) sont réalisées comme douilles à symétrie de révolution pouvant être introduites l'une dans l'autre respectivement par paires,
où les zones de jonction des douilles dans la position attelée sont limitées sur le plan de la superficie à la zone qui s'étend en direction radiale à l'intérieur de la surface d'attelage ou d'engagement (30) du tenon principal (20), et
où toutes les douilles (11-15; 21-25) sont orientées en direction coaxiale l'une par rapport à l'autre et par rapport à l'axe du tenon principal (20),
**caractérisée en ce que** les douilles (15, 25) pour l'alimentation en tension continue sont agencées en direction radiale tout à fait à l'intérieur dans le tenon principal (20) et dans la partie d'alimentation (10), les douilles (13, 14, 23, 24) pour les conduites de données sont agencées en direction radiale plus à l'extérieur dans le tenon principal (20) et dans la partie d'alimentation (10) et les douilles (11, 12, 21, 22) pour les conduites d'alimentation pneumatiques entourent les conduites électriques, et
**en ce que** la douille (11) la plus grande en direction radiale et l'alésage intérieur du tenon principal (20) présentent chacun un diamètre de moins de la moitié du diamètre extérieur de la surface d'attelage et d'engagement (30) du tenon principal (20).
